# EUROPÄISCHE PATENTSCHRIFT

(11) **EP 2 932 739 B1**
(45) Veröffentlichungstag und Bekanntmachung des Hinweises auf die Patenterteilung: **15.04.2020**
(21) Anmeldenummer: 13814856.4
(22) Anmeldetag: 06.12.2013
(51) Int. Cl.: H04W 4/02, H04L 29/08

(54) **NUTZUNG EINES IN EINEM ZENTRALEN SPEICHER GESPEICHERTEN WARENBESTANDS**
UTILIZATION OF AN INVENTORY OF PRODUCTS STORED IN A CENTRAL MEMORY
UTILISATION D'INFORMATIONS DE RÉSERVE DE MARCHANDISES ENREGISTRÉES DANS UNE MÉMOIRE CENTRALE

(30) Priorität: 11.12.2012 DE 102012222703
(43) Veröffentlichungstag der Anmeldung: 21.10.2015
(73) Patentinhaber: BSH Hausgeräte GmbH, 81739 München (DE)
(72) Erfinder: GARBE, Thomas, 85521 Ottobrunn (DE); HÄPP, Claudia, 80639 München (DE); PIETSCH, Ingo, 81829 München (DE)
(86) Internationale Anmeldenummer: PCT/EP2013/075770
(87) Internationale Veröffentlichungsnummer: WO 2014/090695

(56) Entgegenhaltungen:
- DE-A1- 10 144 677
- DE-A1-102008 037 021
- US-A1- 2003 043 070
- US-A1- 2010 262 554
- US-A1- 2012 179 547
- US-A1- 2012 278 190

## Beschreibung

Die Erfindung betrifft ein Verfahren zur Nutzung eines in einem zentralen Speicher gespeicherten haushaltsbezogenen Warenbestands. Die Erfindung betrifft ferner eine Vorrichtung zum Durchführen des Verfahrens. Die Erfindung betrifft auch ein zugehöriges Programmprodukt.

Wenn ein Einkauf zu tätigen ist, ist hilfreich, den Warenbestand im Haushalt zu kennen, um alle fehlende Waren besorgen zu können. Andernfalls besteht Gefahr, dass Waren vergessen werden und ein erneuter Einkauf vorzunehmen ist. Daher wird oftmals eine Einkaufsliste mit einem Bedarf an Waren geschrieben.

Es sind Kühlschränke bekannt, welche ihren Wareninhalt überwachen und Fehlbestände anzeigen können, z.B. mittels Abfrage von Speisebehältern durch eine RFID-Technologie. Allgemein bekannt ist, dass heutige mobile Kommunikationsendgeräte, welche teilweise auch als Smartphone bezeichnet werden, eine Fähigkeit zur Positionsbestimmung aufweisen. Die Positionsbestimmung kann beispielsweise durch GPS (GPS: Globales Positions-System) durchgeführt werden, falls das mobile Kommunikationsendgerät mit einem GPS-Empfänger ausgestattet ist, alternativ durch Triangulation mit Mobilfunk-Basisstationen. Die Positionsbestimmung kann beispielsweise zur Routenplanung verwendet werden, z.B. von einem Wohnort zu einem für einen Einkauf vorgesehenen Handelsort, oder für ortsabhängige Anzeige von Dienstleistungen, sog. 'Location Based Services'.

Verwandte Verfahren sind auch bekannt aus US 2010/0262554 A1, US 2012/0179547 A1, DE 10 2008 037 021 A1, DE 101 22 677 A1, US 2012/0278190 A1 und US 2003/0043070 A1.

Es ist die Aufgabe der vorliegenden Erfindung, die Nachteile des Standes der Technik zumindest teilweise zu überwinden und insbesondere einen möglichst zügigen und vollständigen Einkauf zu ermöglichen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren gemäß Anspruch 1.

Dadurch ergibt sich der Vorteil, dass das mobile Kommunikationsendgerät dem Nutzer eigenständig ortsbezogene Information zum Warenbestand anzeigen kann. So wird dem Nutzer eine Durchführung eines Einkaufs erleichtert, beispielsweise für den Fall, dass er sich nicht bewusst ist, dass sich ein Handelsort in der Nähe befindet. Auch sind spontane Einkäufe einfacher durchführbar. Darüber hinaus mag ein für viele Nutzer aufwändiges, nutzerseitig aktives Abrufen und ggf. Aktualisieren eines Warenbestands (z.B. in Form einer auf dem mobilen Kommunikationsendgerät zuvor manuell eingegebenen und dort gespeicherten Einkaufsliste) entfallen.

Unter einem 'haushaltsbezogenen Warenbestand' kann insbesondere ein Bestand von Waren verstanden werden, welche ein Nutzer in seinem Haushalt verwendet. Der haushaltsbezogene Warenbestand mag insbesondere ein haushaltsgerätebezogener Warenbestand sein. Der haushaltsgerätebezogene Warenbestand mag insbesondere Waren umfassen, die durch mindestens ein Haushaltsgerät verwaltet oder behandelt werden oder werden sollen (z.B. in einem Kühlschrank zu lagernde Lebensmittel oder andere lagernde, z.B. durch ein Gargerät oder Haushaltskleingerät wie eine Kaffeemaschine oder einen Toaster zu behandelnde, Lebensmittel) oder zum Betrieb eines Haushaltsgeräts benötigt werden (z.B. Spülmittel, Waschmittel, Weichspüler, Entkalker usw.).

Das mobile Kommunikationsendgerät mag beispielsweise ein Mobiltelefon, Smartphone, Tablet-PC, 'E-Reader' usw. umfassen. Das automatische Ausführen umfasst ein selbstständiges Ausführen durch das mobile Kommunikationsendgerät.

Die Positionsbestimmung wird auf grundsätzlich bekannte Weise durch das mobile Kommunikationsendgerät durchgeführt, z.B. mittels GPS oder Triangulation.

Der für den Warenbestand bzw. zumindest einen Teil seiner Waren relevante Ort mag beispielsweise ein Handelsort sein, z.B. ein Supermarkt, eine Drogerie, ein Einkaufszentrum, ein Outlet-Center usw.

Es ist eine Ausgestaltung, dass die Aktion ein Abrufen des gespeicherten Warenbestands aus dem zentralen Speicher umfasst. Dadurch kann dem Nutzer der Warenbestand auf besonders einfache Weise bereitgestellt werden. Das Abrufen aus dem zentralen Speicher ist vorteilhaft, da dem Nutzer über sein Kommunikationsendgerät stets ein aktueller Warenbestand bzw. Bedarf an Waren zur Verfügung steht. Der Warenbestand kann so auch von mehreren Nutzern bzw. mobilen Kommunikationsendgerät abgerufen werden. Das Abrufen kann mit einem einfachen Anzeigen des Warenbestands auf dem Kommunikationsendgerät und/oder mit einem Abspeichern in einem im Kommunikationsendgerät integrierten Speicher verbunden sein.

Ein automatisches Abrufen des Warenbestands aus dem zentralen Speicher ist insbesondere vorteilhaft, wenn der Nutzer möglicherweise keine Kenntnis über einen aktualisierten Warenbedarf hat und zufällig an einem dafür geeigneten Handelsort ankommt oder vorbeigeht und bei Bedarf durch sein Kommunikationsendgerät insbesondere automatisch erinnert werden kann.

Es ist noch eine Ausgestaltung, dass der Warenbestand automatisch durch das mobile Kommunikationsendgerät aus dem zentralen Speicher abgerufen wird. Befindet sich also das mobile Kommunikationsendgerät im Bereich eines für den Warenbestand relevanten Orts, wird automatisch der Warenbestand abgerufen und ggf. angezeigt. So werden eine Notwendigkeit, dass der Nutzer tätig werden muss, weiter verringert und eine Nutzerfreundlichkeit verbessert. Das Abrufen kann mit mindestens einem Hinweis, z.B. einem akustischen Hinweis, verbunden sein.

Es ist zudem eine Ausgestaltung, dass die Aktion ein Ausgeben mindestens eines Hinweises umfasst, z.B. eines akustischen Signal, eines optischen Signals und/oder eines Texthinweises. Der Nutzer wird so an einen möglichen Warenbedarf bzw. Einkauf daran hingewiesen, wenn er sich dem relevanten Ort nähert oder einen solchen Ort betritt.

Durch eine Ausgabe des mindestens einen Hinweises insbesondere zunächst ohne Abruf und/oder Anzeige des Warenbestands o.ä. bekommt ein Nutzer insbesondere die Gelegenheit, selbst zu entscheiden, ob er den Warenbestand aus dem zentralen Speicher abruft oder einen bereits aus dem zentralen Speicher abgerufenen, aber noch nicht angezeigten Warenbestand anzeigen lässt. Das folgende Abrufen kann insbesondere durch eine Bestätigungseingabe erfolgen. Diese Weiterbildung ist für das Kommunikationsendgerät insbesondere dann Ressourcen schonend, wenn der Warenbestand erst nach Bestätigung von dem zentralen Speicher auf das Kommunikationsendgerät übertragen wird. Es ist also eine Weiterbildung, dass das Abrufen des Warenbestands erst nach einer nutzerseitigen Bestätigung erfolgt.

Das Verfahren mag beispielsweise als Anwendungsprogramm ("App") in dem mobilen Kommunikationsendgerät implementiert sein. Dann mag z.B. der Hinweis ein akustisches Signal und eine optische Hervorhebung eines Symbols für das Anwendungsprogramm umfassen, ggf. mit einem Zusatztext, welcher eine Identifizierung des relevanten orts zulässt. Mit Betätigen des Symbols durch den Nutzer (im Sinne einer Bestätigungeingabe) kann der Warenbestand angezeigt werden. Verlässt ein Nutzer den relevanten Ort, mag das Anwendungsprogramm automatisch wieder zurückgesetzt werden.

Es ist auch eine Ausgestaltung, dass eine in dem zentralen Speicher gespeicherte Einkaufsliste abgerufen wird, also eine "Negativliste" fehlender Waren. Dazu mögen Sollwerte eines gewünschten Warenbestands verwendet werden. Alternativ oder zusätzlich mag auch der im Haushalt vorliegende Warenbestand (als Positivliste) angezeigt werden.

Es ist ferner eine Ausgestaltung, dass mittels der in dem zentralen Speicher hinterlegten Waren eine Einkaufsliste gebildet wird. Das Bilden der Einkaufsliste kann insbesondere in dem zentralen Speicher oder in dem mobilen Kommunikationsendgerät durchgeführt werden, z.B. mit den durch einen Nutzer vorgegebenen Sollwerten.

Durch die oben beschriebenen Methoden erhält der Nutzer in der Nähe, beim Erreichen oder beim Betreten des für den Warenbestand relevanten Orts eine Übersicht über seinen aktuellen Warenbestand und/oder seinen momentanen Warenbedarf. Der Nutzer kann also auf, ggf. verschiedene, Weise von dem mobilen Kommunikationsgerät abfragen, insbesondere ablesen, ob und gegebenenfalls welche haushaltsbezogenen Waren dort zu kaufen sind, um seinen momentanen Warenbedarf zumindest teilweise zu decken. Insbesondere braucht kein Einkaufszettel im Vorfeld vor einem Einkauf geschrieben und mitgeführt zu werden.

Es ist eine Weiterbildung, dass mittels eines Bestandsmanagementsystems festgelegt wird oder ist, welche Warenmengen insbesondere zu Hause stets verfügbar sein sollen (Sollwerte). Wird eine bestimmte Warenmenge unterschritten, wird im zentralen Speicher zu der entsprechenden Ware bzw. deren Daten automatisch ein Hinweis auf ein Unterschreiten des zugehörigen Sollwerts hinzugefügt. Bei Vorliegen eines solchen Unterschreitens kann einem Nutzer die zugehörige Ware speziell angezeigt werden und/oder diese Ware automatisch zu einer Einkaufliste hinzugefügt oder als hinzuzufügen markiert werden. Auch ist es eine Weiterbildung, dass durch das Kommunikationsendgerät ein Abgleich zwischen dem Warenbestand im Haushalt als Ist-Situation und der fehlenden Produkte als Soll-Situation durchgeführt wird, wenn der Nutzer z.B. einen Supermarkt als für seinen Warenbedarf geeigneten Handelsort betritt. Ein solches Bestandsmanagementsystem kann im zentralen Speicher zu einzelnen Waren aber auch direkt eine Angabe über einen jeweils konkreten Warenbedarf bereitstellen.

Auch ist es eine Ausgestaltung, dass durch das Kommunikationsendgerät an dem relevanten Ort erworbene Ware erfasst wird und mit dem Warenbestand des zentralen Speichers abgeglichen wird. Dadurch kann der Warenbestand in dem zentralen Speicher aktualisiert werden, insbesondere praktisch in Echtzeit. In einer Weiterbildung kann dann auch der auf dem mobilen Kommunikationsendgerät angezeigte Warenbestand (als Positivliste oder Einkaufsliste usw.) automatisch angepasst bzw. aktualisiert werden. So können beispielsweise Doppelkäufe vermieden werden.

Es ist eine Weiterbildung, dass das Erfassen händisch durch den Nutzer erfolgt, z.B. durch Austragen oder Ändern von Waren aus der Einkaufsliste.

Es ist eine besonders nutzerfreundliche Weiterbildung, dass das Erfassen ein elektronisches oder datentechnisches Erfassen ist, also nicht oder nicht ausschließlich händisch erfolgt, sondern zumindest teilweise durch automatisierte Datenerfassung.

So kann das Erfassen ein Ablesen einer Marke ("Tag") durch das mobile Kommunikationsendgerät umfassen, insbesondere einer sog. QR-Marke. Die QR-Marke kann beispielsweise auf einem Einkaufszettel aufgedruckt sein und insbesondere die Zahl und Art der erworbenen Waren und ggf. andere Daten, wie ein Gewicht, ein Haltbarkeitsdatum usw. in kodierter Form aufweisen. Der QR-Code mag beispielsweise durch das Kommunikationsendgerät abgelesen werden, z.B. mittels einer integrierten Kamera.

Alternativ mag das Erfassen ein Empfangen einer drahtlos übermittelten Datennachricht umfassen, welche insbesondere die Zahl und Art der erworbenen Waren und ggf. andere Daten, wie ein Gewicht, ein Haltbarkeitsdatum usw. durch das Kommunikationsendgerät umfasst. Die Datennachricht mag beispielsweise von einer Kasse des Handelsorts erzeugt werden.

Noch eine Ausgestaltung ist, dass die Aktion ein Versenden einer Nachricht an mindestens ein ausgewähltes anderes mobiles Kommunikationsendgerät umfasst. Dadurch kann eine andere Person des Haushalts, welcher das andere mobile Kommunikationsendgerät gehört, über das Betreten, des Handelsorts einen dortigen Einkauf / Erwerb und/oder eine andere Änderung des Warenbestands informiert werden. So können z.B. Doppelkäufe vermieden werden. Die so informierte andere Person kann sogar einen im zentralen Speicher bislang nicht erfassten Warenbedarf zeitnah (z.B. vor einem Bezahlen) aktualisieren oder direkt von Kommunikationsendgerät zu Kommunikationsendgerät eine Zusatzbestellung an die einkaufende Person abgeben.

Es ist erfindungsgemäß, dass mindestens ein Kühlgerät automatisch in einen vorbestimmten Betriebszustand gesetzt wird (wenn es sich nicht schon darin befindet), falls mindestens eine Ware dem Warenbestand hinzugefügt wird, für die der vorbestimmte Betriebszustand relevant ist. Der vorbestimmte Betriebszustand ist dabei ein Superkühl- oder Schnellgefriermodus. Beispielsweise kann auf Grundlage bestimmter Einkäufe wie Gefrier- oder Kühlgut, z.B. frischem Hackfleisch, ein Gefrierschrank in einen Einfrierzustand mit sehr niedriger Temperatur eingestellt werden, um eine sachgerechte Lagerung zu erleichtern. Ein vorteilhafter Einsatz ist insbesondere möglich in Verbindung mit einem Bestandsmanagement über Daten aus elektronisch erfassten Einkaufsvorgängen, z.B. wie oben beschrieben, welches erweitert wird um die Nutzung von Positionsdaten im Smartphone zur Interaktion mit insbesondere entfernt aufgestellten Hausgeräten.

Erfindungsgemäß wird das Versetzen des Kühlgeräts in den vorbestimmten Betriebszustand abhängig, insbesondere dessen Beginn, von einer Wegstrecke bzw. Wegdauer vom relevanten Ort bzw. Handelsort, an welchem die Ware erworben wurde, zum Aufstellort des Kühlgeräts durchgeführt. Beispielsweise kann abhängig von der Wegdauer ein früheres oder späteres Aktivieren des gewünschten vorbestimmten Betriebszustands des Kühlgeräts geschaltet werden. So mag z.B. bei einem langen Weg ein Gefrierschrank oder Kühlschrank erst gezielt kurz vor dem Eintreffen heruntergekühlt werden. Die Wegstrecke oder Wegdauer kann beispielsweise durch eine auf dem mobilen Kommunikationsendgerät installierte Routenplanung oder Navigationssoftware bestimmt werden. Wie beschrieben, geht erfindungsgemäß das Kühlgerät automatisch in einen Superkühl- oder SchnellGefriermodus über.

Eine andere Ausgestaltung ist, dass sich der zentrale Speicher in einer sog. "Cloud" befindet, also als ein Cloud-Speicher oder Netzspeicher vorliegt. Auf den Netzspeicher kann typischerweise von jedem mit dem Netz(werk) verbindbaren, autorisierten Gerät aus zugegriffen werden. So ist über geeignete Kommunikationsverbindungen ein Zugriff auf den zentralen Speicher von verschiedensten Orten, auch gleichzeitig, möglich. Die Cloud kann dabei beispielsweise durch ein lokales Netz am Wohnort oder Arbeitsort des Nutzers ausgebildet sein, auf welches der Nutzer mit seinem Kommunikationsendgerät über beispielsweise ein Mobilfunknetz zugreifen kann. Besonders vorteilhaft ist eine Weiterbildung, bei der die Cloud über ein Netzwerk wie das Internet zugreifbar ist oder Bestandteil eines solchen Netzwerkes ist. Dadurch können bestehende Ressourcen ausgenutzt werden und der Nutzer kann mit geringen eigenen Kosten- und Geräteaufwand den haushaltsbezogenem Warenbestand im zentralen Speicher pflegen. Alternativ mag der zentrale Speicher an einem bestimmten Gerät verortet sein, z.B. in dem mobilen Kommunikationsendgerät, einem Server, einem PC usw.

Die Aufgabe wird gemäß Anspruch 9 auch gelöst durch eine Vorrichtung oder System, welche zum Durchführen eines solchen Verfahrens ausgebildet ist. Die Vorrichtung weist die gleichen Vorteile auf wie das Verfahren und kann analog ausgebildet werden. Umgesetzt wird dabei insbesondere die Nutzung von Positionsdaten im Kommunikationsendgerät zur Bestimmung eines für den Warenbestand relevanten Orts.

Eine Ausgestaltung davon ist, dass die Vorrichtung ein Kühlgerät umfasst, welches ausgebildet ist zumindest zum Empfangen von Daten zu Waren des Warenbestands über eine Haushaltsgeräte-Kommunikationsverbindung zumindest von dem zentralen Speicher, wobei eine Funktion des Kühlgeräts abhängig von den Daten ansteuerbar ist. Das Austauschen kann ein Empfangen von Daten von dem zentralen Speicher und/oder dem mobilen Kommunikationsendgerät, aber auch eine bidirektionale Datenübertragung mit dem zentralen Speicher und/oder dem mobilen Kommunikationsendgerät, umfassen.

Gemäß einer weiteren Weiterbildung ist vorgesehen, dass von dem Kühlgerät (z.B. einem Kühlschrank) eine Warenanforderung an den zentralen Speicher gesendet wird bzw. dessen Warenbestand entsprechend aktualisiert wird. Dadurch wird an das Kommunikationsendgerät ein entsprechender Bedarf an dieser für das Kühlgerät erforderlichen Ware übermittelt. Beispielsweise können weiterhin eine Spülmaschine, Waschmaschine oder Kaffeemaschine als andere beispielhafte Haushaltsgeräte feststellen, dass ein Entkalken in erforderlich ist und als Ware einen Entkalker anfordern.

Auch ist es eine Ausgestaltung, dass die Vorrichtung ein mobiles Kommunikationsendgerät - insbesondere ein Smartphone - umfasst, das ausgestattet ist mit einer Software zum Durchführen solcher Verfahren.

Eine Ausgestaltung besteht in einem System aus einem derartigen zentralen Speicher, in dem der haushaltsbezogene Warenbestand abspeicherbar ist und/oder mindestens einem zur Durchführung des Verfahrens eingerichteten mobilen Kommunikationsendgerät. Ein solches System kann auch ein ansteuerbares Kühlgerät umfassen.

Die Aufgabe wird auch gelöst durch ein Programmprodukt gemäß Anspruch 12. Eine Ausgestaltung besteht in dem Programmprodukt als Software, welche auch als sogenannte 'App' angeboten sein kann, wobei das Programmprodukt im Kommunikationsendgerät, im Kühlgerät oder in einer netzwerkbasierten Vorrichtung zum Durchführen solcher Verfahren installiert oder installierbar ist.

Software, insbesondere eine auch als "App" genannte Anwendungssoftware, kann dazu auf einem Datenträger bereitgestellt oder von einem entfernten Datenträger über eine Kommunikationsverbindung heruntergeladen werden, um in einen Gerätespeicher übertragen und zum Anwenden in einen Prozessor des Geräts geladen zu werden.

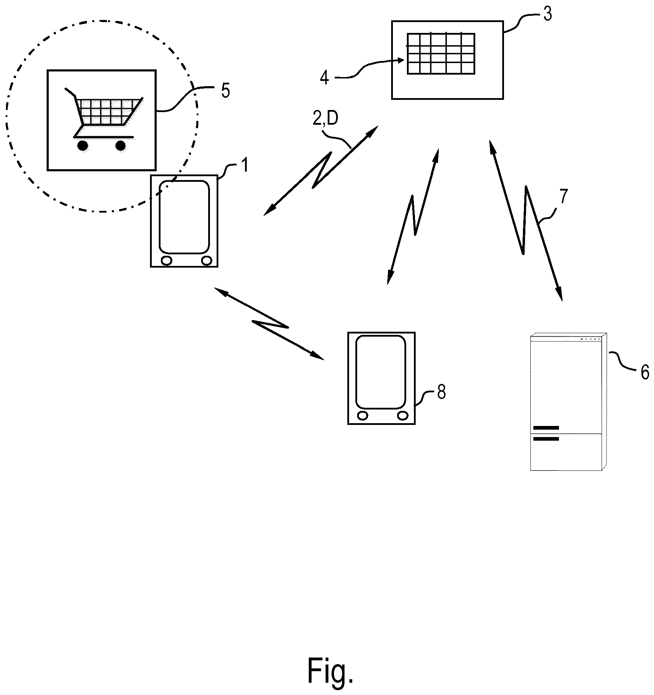

In der Figur wird die Erfindung anhand eines Ausführungsbeispiels schematisch genauer beschrieben, wobei ein mobiles Kommunikationsendgerät anhand seiner Positionsdaten einen Handelsort ermittelt und dem Nutzer einen Warenbestand ausgibt.

Die **Fig.** zeigt ein mobiles Kommunikationsendgerät 1, welches beispielsweise ein Smartphone mit einem GPS-Empfänger zum Empfang von GPS-Daten ist. Mittels der GPS-Daten kann das Kommunikationsendgerät 1 seine momentane Position bestimmen. Das Kommunikationsendgerät 1 weist ferner Komponenten und Funktionen zum Betreiben einer Mobil-Kommunikationsverbindung 2. Über die Mobil-Kommunikationsverbindung 2 kann das Kommunikationsendgerät 1 mit einem zentralen Speicher 3 kommunizieren, um auf insbesondere warenbezogene Daten D auszutauschen. In dem zentralen Speicher 3 sind ein haushaltsbezogener Warenbestand 4 bzw. entsprechende Daten zu Waren gespeichert. Der Warenbestand 4 kann neben Bezeichnungen einzelner Waren insbesondere deren Sollwerte und/oder Istwerte umfassen. Der zentrale Speicher 3 befindet sich insbesondere in einer Cloud bzw. in einer Netzumgebung, welche gegebenenfalls auch als "Rechnerwolke" bezeichnet werden kann. Dargestellt ist in der Nähe des mobilen Kommunikationsendgeräts 1 außerdem ein Handelsort 5 (Geschäft, Drogerie, Supermarkt usw.) als ein haushaltsrelevanter, eine Aktion auslösender Ort.

Eine Software, insbesondere eine sog. 'App.' ist in dem mobilen Kommunikationsendgerät 1 installiert. Die App vergleicht eine momentane Position des mobilen Kommunikationsendgeräts 1 und vergleicht diese mit verfügbaren Informationen über an oder nahe der momentanen Position befindlichen Handelsorten 5. Unterschreitet eine Entfernung zwischen dem mobilen Kommunikationsendgerät 1 und dem Handelsort 5 einen vorbestimmten Wert (welcher als gestrichpunkteter Kreis eingezeichnet ist), werden durch das mobilen Kommunikationsendgerät 1 mehrere Aktionen ausgelöst, nämlich hier ein akustisches Signal (z.B. ein Piepton oder eine Melodie) ausgelöst und auf dem mobilen Kommunikationsendgerät 1 eine Nachricht dargestellt, welche z.B. die Art und den Namen des Handelsorts 5 und ggf. seine Richtung und/oder Entfernung anzeigt. Betätigt ein Nutzer eine Schaltfläche des mobilen Kommunikationsendgeräts 1 zur Bestätigung (Bestätigungseingabe), wird aus dem zentralen Speicher 3 der haushaltsbezogene Warenbestand 4 abgerufen, bevorzugt in Form oder mit einer Einkaufsliste. Die Einkaufsliste kann allgemein auf die Art des Handelsorts 5 abgestimmt sein, z.B. auf dessen Warenangebot, und mag nur an diesem Handelsort verfügbare Waren anzeigen. Der Nutzer des Kommunikationsendgeräts 1 ist somit über sowohl die Einkaufsmöglichkeit am Handelsort 5 als auch über den Warenbestand und somit über einen konkreten Einkaufsbedarf informiert.

Erwirbt der Nutzer des mobilen Kommunikationsendgeräts 1 in dem Handelsort 5 Waren, kann dies dem mobilen Kommunikationsendgerät 1 mitgeteilt werden, z.B. durch manuelles Editieren, durch Auslesen eines auf einer Rechnung o.ä. des Handelsorts 5 vorhandenen QR-Codes, durch Übermitteln einer solche Information enthaltenen Datennachricht an das mobile Kommunikationsendgerät 1 usw.. Diese oder daraus abgeleitete Daten können durch das mobile Kommunikationsendgerät 1 an den zentralen Speicher 3 übermittelt werden, wodurch der Warenbestand 4 aktualisiert wird.

Eine Aktualisierung des Warenbestands 4 bzw. eines Warenbedarfs kann auch durch eine Kommunikation mit einem beispielhaft skizzierten Haushaltsgeräts, hier: eines Kühlschranks 6, durchgeführt werden. Beispielsweise kann der Kühlschrank 6 erkennen, dass eine bestimmte Ware, beispielsweise Milch, entnommen wurde und einen entsprechenden Eintrag im zentralen Speicher 3 vornehmen. Zur Übertragung solcher Daten zu Waren dient beispielsweise eine Haushaltsgeräte-Kommunikationsverbindung 7. Diese kann ebenfalls als eine Mobil-Kommunikationsverbindung ausgestaltet sein, kann aber beispielsweise auch als verkabeltes oder funkgestütztes Netzwerk und gegebenenfalls mit Zugriff über das Internet auf den zentralen Speicher 3 ausgestaltet sein. Jedoch mag der Kühlschrank 6 usw. auch direkt mit dem mobilen Kommunikationsendgerät 1 kommunizieren.

Zusätzlich mag ein Nutzer über eine insbesondere Eingabeeinrichtung, z.B. an dem mobilen Kommunikationsendgerät 1, an einem PC usw., zum Beispiel manuell eingeben, dass er ein bestimmtes Lebensmittel oder Gebrauchsmittel verbraucht hat, um den zugehörigen Warenbestand 4 im zentralen Speicher 3 entsprechend zu reduzieren.

Insbesondere kann der Kühlschrank 6 (oder allgemein ein anderes Haushaltsgerät) in einen vorbestimmten Betriebszustand gesetzt werden, falls mindestens eine Ware dem Warenbestands 4 hinzugefügt wird, für die der vorbestimmte Betriebszustand relevant ist. So mag der Kühlschrank 6 oder ein Teil davon (z.B. ein Gefrierfach) in einen vorbestimmten Kühlzustand versetzt werden, wenn eine Ware in den Warenbestand 4 aufgenommen wird, für welche dieser Kühlzustand vorteilhaft ist. Die Aktivierung dieses Kühlzustands mag auch abhängig von einer Wegstrecke vom Handelsort 5 zum Aufstellort des Kühlschranks 6 verzögert werden, falls die Wegdauer länger ist als die Dauer, welche zur Bereitstellung des Kühlzustands benötigt wird.

Es ist noch eine Weiterbildung, dass, z.B. von dem zentralen Speicher 3 oder dem mobile Kommunikationsendgerät 1 eine Nachricht an mindestens ein ausgewähltes anderes mobiles Kommunikationsendgerät 8 gesendet wird, welches über den Einkauf bzw. die Besorgung informiert.

Obwohl die Erfindung im Detail durch das gezeigte Ausführungsbeispiel näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

So mag der zentrale Speicher3 auch in einem Datenverarbeitungsgerät verortet sein, z.B. in dem mobilen Kommunikationsendgerät 1, in einem Server, einem PC, usw.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: mobiles Kommunikationsendgerät
- 2: Mobil-Kommunikationsverbindung
- 3: zentraler Speicher
- 4: haushaltsbezogenem Warenbestand
- 5: Handelsort
- 6: Haushaltsgerät oder Speicher-Eingabeeinrichtung
- 7: Haushaltsgeräte-Kommunikationsverbindung
- 8: weiteres mobiles Kommunikationsendgerät
- D: Daten zu Waren eines Warenbestands

## Patentansprüche

1. Verfahren zur Nutzung eines in einem zentralen Speicher (3) gespeicherten haushaltsbezogenen Warenbestands (4), wobei das Verfahren mindestens folgende Schritte aufweist:
- Bestimmen einer Position eines mobilen Kommunikationsendgeräts (1) und
- automatisches Ausführen mindestens einer Aktion durch das mobile Kommunikations-endgerät (1), falls durch das Bestimmen der Position festgestellt wurde, dass sich das mobile Kommunikationsendgerät (1) im Bereich eines für den Warenbestand (4) relevanten Orts (5) befindet,
**dadurch gekennzeichnet, dass**
mindestens ein Kühlgerät (6) abhängig von einer Wegstrecke vom relevanten Ort (5) zum Aufstellort des Kühlgeräts (6) automatisch in einen Superkühl- oder Schnellgefriermodus versetzt wird, falls mindestens ein Gefriergut dem gespeicherten haushaltsbezogenen Warenbestand (4) hinzugefügt wird.

2. Verfahren nach Anspruch 1, **dadurch gekennzeichnet, dass** die Aktion ein Abrufen des gespeicherten haushaltsbezogenen Warenbestands (4) aus dem zentralen Speicher (3) umfasst.

3. Verfahren nach einem der vorhergehenden Ansprüche, **dadurch gekennzeichnet, dass** der gespeicherte haushaltsbezogene Warenbestand (4) automatisch durch das mobile Kommunikationsendge-rät (1) aus dem zentralen Speicher (3) abgerufen wird.

4. Verfahren nach einem der vorhergehenden Ansprüche, **dadurch gekennzeichnet, dass** die Aktion ein Ausgeben mindestens eines Hinweises umfasst.

5. Verfahren nach einem der vorherigen Ansprüche, **dadurch gekennzeichnet, dass**
- eine in dem zentralen Speicher (3) gespeicherte Einkaufsliste abgerufen wird oder
- mittels des in dem zentralen Speicher (3) gespeicherten haushaltsbezogenen Warenbestands (4) eine Einkaufsliste gebildet wird.

6. Verfahren nach einem der vorherigen Ansprüche, **dadurch gekennzeichnet, dass** durch das mobile Kommunikationsendgerät (1) an dem relevanten Ort (5) eine durch den Nutzer erworbene Ware erfasst wird und mit dem gespeicherten haushaltsbezogenen Warenbestand (4) abgeglichen wird.

7. Verfahren nach einem der vorherigen Ansprüche, **dadurch gekennzeichnet, dass** die mindestens eine Aktion ein Versenden einer Nachricht an mindestens ein ausgewähltes anderes mobiles Kommunikationsendgerät (8) umfasst.

8. Verfahren nach einem der vorherigen Ansprüche, **dadurch gekennzeichnet, dass** sich der zentrale Speicher (3) in einer Cloud (18) befindet.

9. Vorrichtung (1, 3, 6), **dadurch gekennzeichnet, dass** die Vorrichtung zum Durchführen eines Verfahrens nach einem der vorherigen Ansprüche ausgebildet ist.

10. Vorrichtung (1, 3, 6) nach Anspruch 9, **dadurch gekennzeichnet, dass** die Vorrichtung (1, 3, 6) das Kühlgerät (6) umfasst, welches ausgebildet ist zumindest zum Empfangen von Daten (D) zu Waren des gespeicherten haushaltsbezogenen Warenbestands (4) über eine Haushaltsgeräte-Kommunikationsverbindung (7) zumindest von dem zentralen Speicher (3), wobei das Kühlgerät ausgebildet ist, eine Funktion des Kühlgeräts (6) abhängig von den Daten (D) anzusteuern.

11. Vorrichtung (1, 3, 6) nach Anspruch 9, **dadurch gekennzeichnet, dass** die Vorrichtung (1, 3, 6) das mobile Kommunikationsendgerät (1) umfasst, das ausgestattet ist mit einer Software zum Durchführen des Verfahrens nach einem der Ansprüche 1 bis 8.

12. Programmprodukt, insbesondere Software, zum Durchführen des Verfahrens nach einem der Ansprüche 1 bis 8.

## Claims

1. Method for utilising an inventory (4) of household products stored in a central memory (3), wherein the method has at least the following steps:
- determining a position of a mobile communication terminal (1) and
- automatically executing at least one action by means of the mobile communication terminal (1) if, by determining the position, it has been ascertained that the mobile communication terminal (1) is located in the region of a location (5) which is relevant to the inventory (4) of products,
**characterised in that**
at least one refrigerator (6) is automatically shifted into a super cooling or rapid freezing mode as a function of a distance from the relevant location (5) to the installation location of the refrigerator (6), if at least one item of frozen food is added to the stored inventory (4) of household products.

2. Method according to claim 1, **characterised in that** the action comprises recalling the stored inventory (4) of household products from the central memory (3).

3. Method according to one of the preceding claims, **characterised in that** the inventory (4) of stored household products is recalled automatically from the central memory (3) by means of the mobile communication terminal (1).

4. Method according to one of the preceding claims, **characterised in that** the action comprises outputting at least one notification.

5. Method according to one of the preceding claims, **characterised in that**
- a shopping list stored in the central memory (3) is recalled or
- a shopping list is formed by means of the inventory (4) of household products which is stored in the central memory (3).

6. Method according to one of the preceding claims, **characterised in that** a product purchased by the user is identified by the mobile communication terminal (1) at the relevant location (5) and is compared with the stored inventory (4) of household products.

7. Method according to one of the preceding claims, **characterised in that** the at least one action comprises sending a message to at least one other mobile communication terminal (8) selected.

8. Method according to one of the preceding claims, **characterised in that** the central memory (3) is located in a cloud (18).

9. Device (1, 3, 6), **characterised in that** the device is embodied to carry out a method according to one of the preceding claims.

10. Device (1, 3, 6) according to claim 9, **characterised in that** the device (1, 3, 6) comprises the refrigerator (6), which is embodied at least to receive data (D) about products in the stored inventory (4) of household products by way of a household appliance communication connection (7) at least from the central memory (3), wherein the refrigerator is embodied to actuate a function of the refrigerator (6) as a function of the data (D).

11. Device (1, 3, 6) according to claim 9, **characterised in that** the device (1, 3, 6) comprises the mobile communication terminal (1) which is equipped with software for carrying out the method according to one of claims 1 to 8.

12. Program product, in particular software, for carrying out the method according to one of claims 1 to 8.

## Revendications

1. Procédé destiné à l'utilisation d'un stock de marchandises (4) relatif à un appareil électroménager enregistré dans une mémoire centrale (3), dans lequel le procédé présente au moins les étapes suivantes :
- détermination d'une position d'un terminal de communication mobile (1) et
- réalisation automatique d'au moins une action par le biais du terminal de communication mobile (1) dans le cas où il a été constaté par le biais de la détermination de la position que le terminal de communication mobile (1) se trouve dans la zone d'un site d'importance (5) pour le stock de marchandises (4),
**caractérisé en ce que**
au moins un appareil frigorifique (6) est déplacé automatiquement en fonction d'un parcours depuis le site d'importance (5) vers le site d'installation de l'appareil frigorifique (6) dans un mode de super-congélation ou de congélation rapide dans le cas où un produit congelé est ajouté au stock de marchandises (4) relatif à un appareil électroménager.

2. Procédé selon la revendication 1, **caractérisé en ce que** l'action comprend une consultation du stock de marchandises (4) relatif à un appareil électroménager enregistré à partir de la mémoire centrale (3).

3. Procédé selon l'une des revendications précédentes, **caractérisé en ce que** le stock de marchandises (4) relatif à un appareil électroménager enregistré est consulté automatiquement par le biais du terminal de communication mobile (1) à partir de la mémoire centrale (3).

4. Procédé selon l'une des revendications précédentes, **caractérisé en ce que** l'action comprend une émission d'au moins une indication.

5. Procédé selon l'une des revendications précédentes, **caractérisé en ce que**
- une liste de courses enregistrée dans la mémoire centrale (3) est consultée ou
- une liste de courses est formée au moyen du stock de marchandises (4) relatif à un appareil électroménager enregistré dans la mémoire centrale (3).

6. Procédé selon l'une des revendications précédentes, **caractérisé en ce que** par le biais du terminal de communication mobile (1) une marchandise obtenue par le biais de l'utilisateur est saisie au niveau du site d'importance (5) et est comparée avec le stock de marchandises (4) relatif à un appareil électroménager enregistré.

7. Procédé selon l'une des revendications précédentes, **caractérisé en ce que** l'au moins une action comprend un envoi d'un message à au moins un autre terminal de communication mobile (8) sélectionné.

8. Procédé selon l'une des revendications précédentes, **caractérisé en ce que** la mémoire centrale (3) se trouve dans un nuage informatique (18).

9. Dispositif (1, 3, 6), **caractérisé en ce que** le dispositif est réalisé pour l'exécution d'un procédé selon l'une des revendications précédentes.

10. Dispositif (1, 3, 6) selon la revendication 9, **caractérisé en ce que** le dispositif (1, 3, 6) comprend l'appareil frigorifique (6), qui est réalisé au moins pour la réception de données (D) concernant des marchandises du stock de marchandises (4) relatif à un appareil électroménager enregistré, via une liaison de communication d'appareils électroménagers (7) d'au moins une mémoire centrale (3), dans lequel l'appareil frigorifique est réalisé pour commander une fonction de l'appareil frigorifique (6) en fonction des données (D).

11. Dispositif (1, 3, 6) selon la revendication 9, **caractérisé en ce que** le dispositif (1, 3, 6) comprend le terminal de communication mobile (1) qui est doté d'un logiciel destiné à l'exécution du procédé selon l'une des revendications 1 à 8.

12. Produit de programme, en particulier logiciel, destiné à l'exécution du procédé selon l'une des revendications 1 à 8.
